(19)

Europäisches Patentamt
European Patent Office
Office européen des brevets

(11) **EP 3 379 259 A1**

(12) **EUROPEAN PATENT APPLICATION**

(43) Date of publication:
26.09.2018 Bulletin 2018/39

(51) Int Cl.:
***G01P 5/16*** *(2006.01)*

(21) Application number: 17162864.7

(22) Date of filing: **24.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **AIRBUS OPERATIONS (S.A.S)**
**31060 Toulouse (FR)**
• **Airbus Operations S.L.**
**28906 Getafe, Madrid (ES)**

(72) Inventors:
• **FAMILY, Oliver**
**31270 Cugnaux (FR)**

• **TODD, Nicholas**
**31300 Toulouse (FR)**
• **SOUCHELEAU, Bertrand**
**31880 La Salvetat Saint Gilles (FR)**
• **VALSECCHI, Franck**
**31490 Leguevin (FR)**
• **AMBIT MARIN, Laura**
**28017 Madrid (ES)**

(74) Representative: **Gicquel, Olivier Yves Gérard**
**Airbus Opérations S.A.S.**
**Intellectual Property Department**
**316, route de Bayonne**
**ETRT - M0101/1**
**31060 Toulouse (FR)**

(54) **VERTICAL WIND SENSING SYSTEM**

(57) A method of determining vertical wind using an aircraft sensor system carried by an aircraft in flight. The aircraft sensor system is operated to obtain flight parameters of the aircraft, the flight parameters comprising: vertical ground speed, air speed, pitch, and angle of attack. The vertical wind is determined in accordance with the formula: vertical wind = UZ0 - TAS.sin($\theta$-$\alpha$), where UZ0 is the vertical ground speed; TAS is the air speed; $\theta$ is the pitch; and $\alpha$ is the angle of attack. The vertical wind can then be used by the aircraft, or other aircraft, to optimise their flight paths based on favourable up wind.

# Figure 1

EP 3 379 259 A1

**Description**

FIELD OF THE INVENTION

The present invention relates to a method of determining vertical wind using an aircraft sensor system carried by an aircraft in flight, and an associated vertical wind sensing system or network.

BACKGROUND OF THE INVENTION

Meterological agencies measure horizontal winds, and flight paths are optimised to take advantage of favourable horizontal winds (tail winds).

Aircraft can also be used to measure horizontal winds. An example is described in "Airplanes Aloft as a Sensor Network for Wind Forecasting", Kapoor et al, http://research.microsoft.com/en-us/um/people/horvitz/planesenors.pdflink. Winds encountered by aircraft are inferred on the basis of a ground speed observation, and the airspeed as expressed in the flight plan. Another example is given in "Using aircraft as wind sensors for estimating accurate wind fields for air traffic management applications", Guadano et al, http://oa.upm.es/36006/1/INVE_MEM_2014195683.pdf.

SUMMARY OF THE INVENTION

A first aspect of the invention provides a method of determining vertical wind using an aircraft sensor system carried by an aircraft in flight, as set out in claim 1.

An aircraft sensor system is operated to obtain vertical ground speed, air speed, pitch, and angle of attack. These parameters are then used to determine the vertical wind. Aircraft flying in regions of down wind burn more fuel than aircraft flying in regions of up wind. The invention provides a method of measuring vertical wind using an aircraft sensor system, which can then be used by the aircraft, or other aircraft, to optimise their flight paths based on favourable up wind. Alternatively, the vertical wind can be used to analyse drag characteristics of the aircraft or for some other reason.

The vertical ground speed may be obtained by a global positioning system (GPS) unit. Typically the vertical ground speed is the vertical speed of the aircraft relative to the ground.

The air speed may be obtained by a pitot-static system, or other air speed measurement system. Typically the air speed is the speed of the aircraft relative to the air. The air speed obtained by the pitot-static system may optionally be corrected to account for the angle of attack of the aircraft.

The pitch may be obtained by an inertial reference unit such as a gyroscope. Typically the pitch is an angle of inclination of a reference line of the aircraft (such as its longitudinal axis) relative to the horizontal.

The angle of attack may be obtained by an angle of attack probe such as a rotating vane. Typically the angle of attack is the angle between a reference line of the aircraft (such as a chord line of its wing) and a vector representing the relative motion between the aircraft and the air.

Typically the vertical wind is determined in accordance with the following formula, or a mathematical equivalent: vertical wind = $UZ0 - TAS.\sin(\theta-\alpha)$, where $UZ0$ is the vertical ground speed; $TAS$ is the air speed; $\theta$ is the pitch; and $\alpha$ is the angle of attack.

Optionally the method comprises operating an angle of attack (AOA) probe of the aircraft sensor system to obtain the angle of attack of the aircraft. The AOA probe may be a rotating vane, or any other type of AOA probe.

The angle of attack may be obtained by: operating an angle of attack (AOA) probe of the aircraft sensor system to obtain a directly-measured angle of attack of the aircraft; operating the aircraft sensor system to measure a flight path angle of the aircraft relative to the ground; calculating an estimated angle of attack in accordance with the flight path angle of the aircraft relative to the ground and the pitch; and de-biasing the directly-measured angle of attack of the aircraft in accordance with a difference between the directly-measured angle of attack and the estimated angle of attack. The de-biasing may be achieved by averaging the difference over a time period, or by performing multiple linear regressions of the difference.

The vertical wind may be stored and/or displayed, either on the aircraft or at a ground station.

A computer carried by the aircraft may be operated to determine the vertical wind in accordance with the flight parameters obtained by the aircraft sensor system. The vertical wind may then be transmitted from the aircraft in flight - either to a ground station or directly to another aircraft. Alternatively the aircraft may transmit the flight parameters to a ground station which calculates the vertical wind.

A second aspect of the invention provides a flight path optimisation method as set out in claim 8, in which a vertical wind determined by a first aircraft in flight is used to optimise a flight path of a second aircraft in flight. The second aspect of the invention can be extended to provide a network of connected aircraft which share vertical wind information and optimise their flight paths based on favourable up winds.

A third aspect of the invention provides a vertical wind sensing system as set out in claim 9. An aircraft sensor system is arranged to obtain flight parameters of the aircraft; and a computer is configured to determine the vertical wind in accordance with the flight parameters obtained by the aircraft sensor system. The computer may be carried by the aircraft, or it may be at a ground station or another aircraft. For example, the computer may be part of a Flight Guidance and Management System (FGMS) carried by the aircraft or an Air Data Inertial Reference System (ADIRS) carried by the aircraft.

Typically the aircraft sensor system comprises a global positioning system (GPS) unit, arranged to obtain the vertical ground speed of the aircraft.

Typically the aircraft sensor system comprises a pitot-static system, or other air speed measurement sensor, arranged to obtain the air speed of the aircraft.

Typically the aircraft sensor system comprises an inertial reference unit, such as a gyroscope, arranged to obtain the pitch of the aircraft.

Typically the aircraft sensor system comprises an angle of attack (AOA) probe, such as a rotating vane, arranged to obtain the angle of attack of the aircraft.

A fourth aspect of the invention provides a vertical wind sensing network as set out in claim 15, in which a central repository is arranged to receive and collate vertical winds from plural vertical wind sensing systems. The central repository, which may be located for instance at a meteorological office or airline operations centre, can create a map of vertical winds.

BRIEF DESCRIPTION OF THE DRAWINGS

Embodiments of the invention will now be described with reference to the accompanying drawings, in which:

Figure 1 is a side view of an aircraft which forms part of a vertical wind sensing system;

Figure 2 is a schematic diagram showing an aircraft sensor system and other electronic equipment on-board the aircraft; and

Figure 3 shows a vertical wind sensing network incorporating the aircraft of Figure 1.

DETAILED DESCRIPTION OF EMBODIMENT(S)

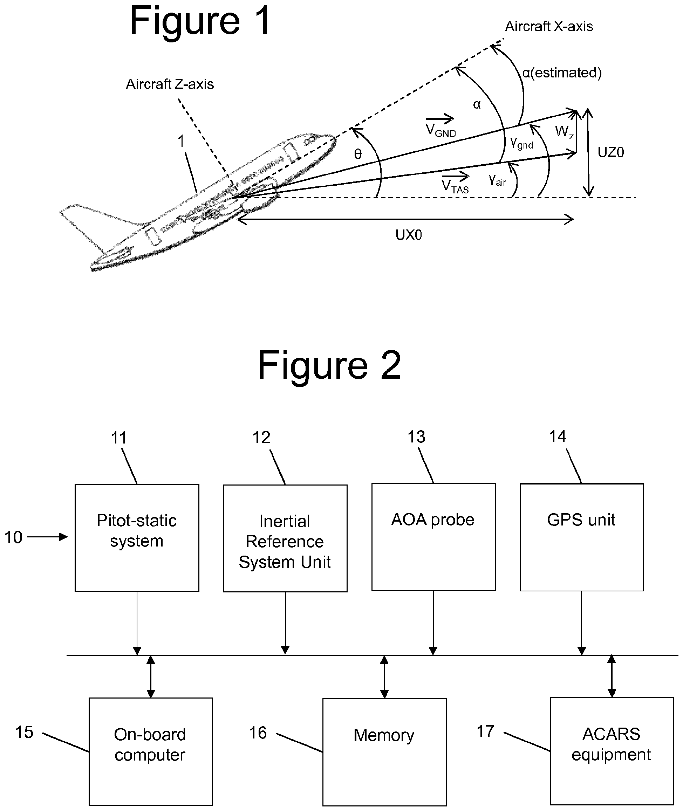

An aircraft 1 shown in Figure 1 carries an aircraft sensor system 10 shown in Figure 2. The aircraft sensor system 10 comprises various sensors arranged to obtain flight parameters of the aircraft. The sensors include a pitot-static sensor system 11 arranged to obtain the air speed of the aircraft; an air data inertial reference unit (ADIRU) 12, such as a gyroscope, arranged to obtain the pitch of the aircraft; an angle of attack (AOA) probe 13 arranged to obtain the angle of attack of the aircraft; and a global positioning system (GPS) unit 14. The sensors 11-14 are connected to an on-board computer 15 which may be part of a Flight Guidance and Management System (FGMS) or Air Data Inertial Reference System (ADIRS) installed on the aircraft.

The pitot-static sensor system 11 comprises one or more pitot-tube sensors which detect ambient air pressure affected by the motion of the aircraft (pitot pressure) and one or more sensors which detect ambient pressure unaffected by the motion of the aircraft (static pressure). The difference between these pressures is then used by the pitot-static sensor system 11 to calculate a true air speed - that is, the speed of the aircraft relative to the air mass in which it is flying.

The velocity of the aircraft relative to the air is indicated in Figure 1 as a vector $V_{TAS}$. The aircraft has a frame of reference with an X-axis shown in Figure 1, a Z-axis also shown in Figure 1, and a Y-axis not shown. The vector $V_{TAS}$ has X, Y and Z components $V_X$, $V_Y$, $V_Z$, in this frame of reference. The pitot-static sensor system 11 is aligned with the aircraft X-axis, so the true air speed output by the pitot-static sensor system 11 is a scalar quantity $V_X$ indicating the X-component only.

The X-axis of the aircraft has an angle of attack, indicated as $\alpha$ in Figure 1, relative to the airflow. This angle of attack $\alpha$ is measured by an angle of attack (AOA) probe 13. The AOA probe 13 comprises a vane which is exposed to the airflow so that it rotates about an axis of rotation parallel with the aircraft Y-axis to line up with the airflow. So the angle of the AOA probe 13 gives the angle of attack $\alpha$.

The angle of attack $\alpha$ from the AOA probe 13 is used to obtain $V_Z$, so the true airspeed (TAS) in the XZ plane can then be calculated as: $TAS = SQRT (V_X^2 + V_Z^2)$

The sideslip Vy of the aircraft is assumed to be zero.

The aircraft X-axis has a pitch $\theta$ relative to a horizontal plane, as indicated in Figure 1. The inertial reference system unit 12 measures this angle $\theta$.

The aircraft has a velocity vector $V_{GND}$ relative to the ground with horizontal components UX0, UY0, and a vertical component UZ0. A Global Position System (GPS) unit 14 measures the position of the aircraft relative to the ground, and differentiates the Z-component of this position with respect to time to obtain UZ0.

The wind acting on the aircraft has horizontal wind components $W_x$, $W_y$, and a vertical wind component $W_z$ which will be referred to below as vertical wind.

The vertical wind $W_z$ is calculated by the on-board computer 15 in accordance with formula (1) below:

$$\text{vertical wind } W_z \text{ in m/s} = UZ0 - TAS.\sin(\theta-\alpha) \qquad (1)$$

where

UZ0 is the vertical component of the aircraft's velocity relative to the ground;
TAS is the true air speed discussed above;
$\theta$ is the aircraft pitch measured by the inertial reference system unit 12; and
$\alpha$ is the angle of attack measured by the AOA probe 13.

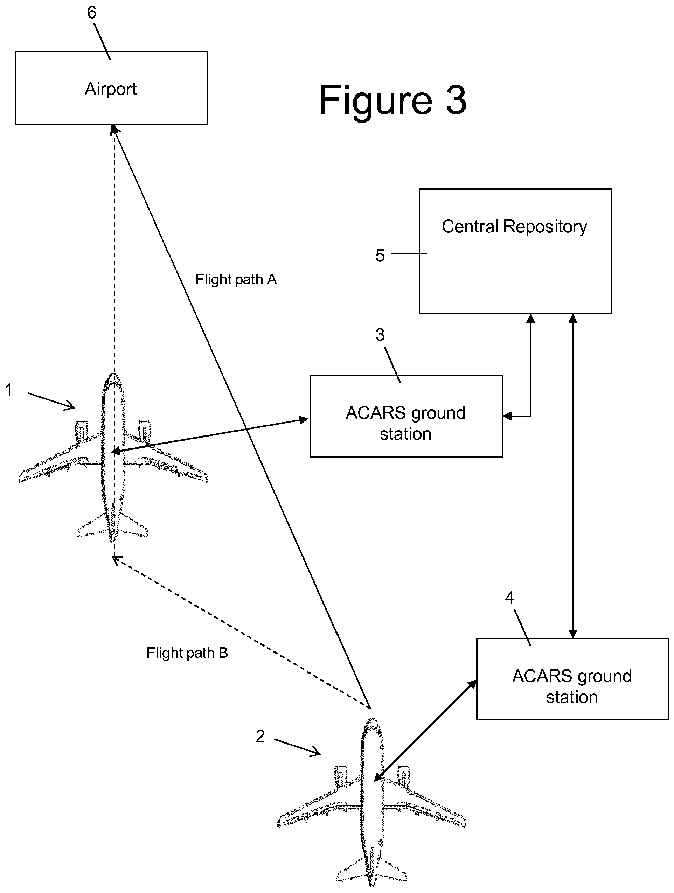

The vertical wind may be stored in a memory 16 on-board the aircraft and/or displayed on the aircraft. The aircraft 1 carries various Aircraft Communications Addressing and Reporting System (ACARS) equipment 17 which can transmit and receive data to an ACARS ground station. This enables the aircraft 1 to form part of an vertical wind sensing network shown in Figure 3. The network comprises a plurality of aircraft each of which can determine the vertical wind as described above and transmit it to a respective ACARS ground station 3, 4. In the case of Figure 3 only two aircraft 1, 2 are shown but in practice the number of aircraft will be much larger. A central repository 5 (at an aircraft operations centre or meteorological office) is arranged to receive and collate the vertical winds received from the aircraft 1, 2 via the ACARS ground stations 3, 4.

The aircraft 1, 2 periodically transmit vertical wind, latitude, longitude and other relevant information from its aircraft sensor system 10 to the central repository 5 during flight. The central repository 5 can then collate the vertical wind information provided by all the aircraft. This will give a view of the 3D wind along the flight paths of multiple aircraft. Interpolation of the 3D wind, together with other forecasts, can create a contiguous and real-time 3D wind map to the airlines. The airlines can then adjust flight plans to take into account both favourable horizontal wind (namely, tail winds) and favourable vertical winds (namely, up winds).

A simplified flight path optimisation method is shown in Figure 3. The first and second aircraft 1, 2 are enroute to an airport 6. The second aircraft 2 is following a flight path A. A vertical wind is determined by the first aircraft 1 and communicated to the central repository 5. This is communicated to the second aircraft 2 by the central repository 5 via the ACARS ground station 4. The vertical wind information from the first aircraft 1 is used by the second aircraft 2 to optimise its flight path. In this case the first aircraft 1 is experiencing an up wind, so the route of the second aircraft 2 is adjusted to follow an alternative flight path B.

To calculate the vertical wind, an accurate value of the angle of attack $\alpha$ is required. The directly-measured angle of attack $\alpha$(measured) output by the AOA probe 13 can be accurate in variations, but inaccurate in absolute terms. In other words $\alpha$(measured) has an unknown and relatively constant error.

As shown in Figure 1, the aircraft has a flight path angle $\gamma_{air}$ relative to the air and a flight path angle $\gamma_{gnd}$ relative to the ground. The flight path angle $\gamma_{gnd}$ relative to the ground can be measured by the GPS unit 14. A theoretical angle of attack $\alpha$(theoretical) is given by a difference between the pitch $\theta$ and the flight path angle $\gamma_{air}$, relative to the air: $\alpha$(theoretical) = $\theta$ - $\gamma_{air}$. An estimated angle of attack $\alpha$(estimated) is given by a difference between the pitch $\theta$ and the flight path angle $\gamma_{gnd}$, relative to the ground: $\alpha$(estimated) = $\theta$ - $\gamma_{gnd}$.

In the absence of vertical wind (i.e. if $W_z = 0$), then $\gamma_{air} = \gamma_{gnd}$ and therefore $\alpha$(theoretical) = $\alpha$(estimated). For an aircraft cruising at near-constant Mach number, over a sufficiently long period of time (such as 30 minutes), the vertical wind $W_z$ can be assumed to be approximately zero on average. In other words, over a relatively long time scale there is likely to be roughly equal amounts of up wind and down wind. So on average $\alpha$(theoretical) = $\alpha$(estimated) = $\theta$ - ygnd. This can be used to de-bias the directly-measured angle of attack $\alpha$(measured), providing an accurate angle of attack both in absolute and relative terms, and thus an accurate vertical wind measurement.

The angle of attack can be de-biased by the following method:

Calculate the average of the directly-measured angle of attack $\alpha$(measured) over a time-slice, such as 30 minutes

Calculate the average of the estimated angle of attack $\alpha$(estimated) = $\theta$ - ygnd, over a time-slice, such as 30 minutes

Apply the difference in averages to the directly-measured angle of attack to correct the de-bias and generate a de-biased angle of attack $\alpha$(de-biased) in accordance with the following formula:

$$\alpha(\text{de-biased}) = \alpha(\text{measured}) + \text{sum} \,((\theta - \gamma_{gnd}) - \alpha(\text{measured})) \,/\, (\text{number of points in time-slice})$$

A more accurate way of de-biasing the angle of attack is to perform multiple linear regressions of the difference between the directly-measured angle of attack and the estimated angle of attack, taking into account the angle of attack, Mach number and engine fan speed, in accordance with the following formula:

$$\alpha(\text{de-biased}) = \alpha(\text{measured}) - (A1.\alpha(\text{measured}) + A2) - (B1.N1 + B2) - (C1.Mach + C2),$$

where N1 is the engine fan speed, and Mach is the Mach number of the aircraft.

The coefficients A1, A2, B1, B2, C1 and C2 are calculated in the following way.

Select cruise points in a narrow Mach and N1 range (for example, 0.005Mach and 3% N1).

Perform a linear regression on the difference between the directly-measured angle of attack and the estimated angle of attack to get the coefficients A1 (slope) and A2 (intercept).

Select the cruise points in a narrow Mach range, and all N1s.

Perform a linear regression on the difference between the directly-measured angle of attack and the estimated angle of attack to get the coefficients B1 (slope) and B2 (intercept).

Select all the cruise points.

Perform a linear regression on the difference between the measured angle of attack and the estimated angle of attack to get the coefficients C1 (slope) and C2 (intercept).

The de-biased angle of attack $\alpha$(de-biased), calculated by either of the above methods, can then be introduced into equation (1) to provide a more accurate calculation of the vertical wind.

Although the invention has been described above with reference to one or more preferred embodiments, it will be appreciated that various changes or modifications may be made without departing from the scope of the invention as defined in the appended claims.

## Claims

1. A method of determining vertical wind using an aircraft sensor system (10) carried by an aircraft (1) in flight, the method comprising:

   operating the aircraft sensor system (10) to obtain flight parameters of the aircraft, the flight parameters comprising: vertical ground speed, air speed, pitch, and angle of attack; and
   determining the vertical wind in accordance with the flight parameters obtained by the aircraft sensor system (10).

2. A method according to claim 1 wherein the vertical wind is determined in accordance with the formula, or a mathematical equivalent:

   vertical wind = UZ0 - TAS.sin($\theta$-$\alpha$)
   where UZ0 is the vertical ground speed; TAS is the air speed; $\theta$ is the pitch; and $\alpha$ is the angle of attack.

3. A method according to claim 1 or 2 wherein the method comprises operating an angle of attack (AOA) probe (13) of the aircraft sensor system to obtain the angle of attack of the aircraft.

4. A method according to any preceding claim wherein the angle of attack is obtained by:

   operating an angle of attack (AOA) probe (10) of the aircraft sensor system to obtain a directly-measured angle of attack of the aircraft;
   operating the aircraft sensor system (10) to measure a flight path angle of the aircraft relative to the ground;
   calculating an estimated angle of attack in accordance with the flight path angle of the aircraft relative to the ground and the pitch; and
   de-biasing the directly-measured angle of attack of the aircraft in accordance with a difference between the directly-measured angle of attack and the estimated angle of attack.

5. A method according to any preceding claim further comprising storing and/or displaying the vertical wind.

6. A method according to any preceding claim comprising operating a computer (15) carried by the aircraft to determine the vertical wind in accordance with the flight parameters obtained by the aircraft sensor system (10).

7. A method according to any preceding claim further comprising operating a computer carried (15) by the aircraft to determine the vertical wind in accordance with the flight parameters obtained by the aircraft sensor system (10), and transmitting the vertical wind from the aircraft (1) in flight.

8. A flight path optimisation method comprising: determining vertical wind by a method according to any preceding claim using an aircraft sensor system (10) carried by a first aircraft (1) in flight; and using the vertical wind determined by the first aircraft in flight to optimise a flight path of a second aircraft (2) in flight.

9. A vertical wind sensing system comprising:

an aircraft (1,2);
an aircraft sensor system (10) carried by the aircraft, wherein the aircraft sensor system is arranged to obtain flight parameters of the aircraft, the flight parameters comprising: vertical ground speed, air speed, pitch, and angle of attack; and
a computer (15) carried by the aircraft (1,2) configured to determine the vertical wind in accordance with the flight parameters obtained by the aircraft sensor system (10).

10. A system according to claim 9 wherein the aircraft sensor system (10) comprises a global positioning system (GPS) unit (14) arranged to obtain the vertical ground speed of the aircraft (1,2).

11. A system according to claim 9 or 10 wherein the aircraft sensor system (10) comprises a pitot-static system (11) arranged to obtain the air speed of the aircraft.

12. A system according to any of claims 9 to 11 wherein the aircraft sensor system (10) comprises an inertial reference unit (12) arranged to obtain the pitch of the aircraft.

13. A system according to any of claims 9 to 12 wherein the aircraft sensor system (10) comprises an angle of attack (AOA) probe (13) arranged to obtain the angle of attack of the aircraft.

14. A vertical wind sensing network, the network comprising:

a plurality of vertical wind sensing systems according to any of claims 9 to 13; and
a central repository (5) arranged to receive and collate the vertical winds from the vertical wind sensing systems.

# Figure 1

# Figure 2

Figure 3

Europäisches
Patentamt

European
Patent Office

Office européen
des brevets

**EUROPEAN SEARCH REPORT**

Application Number

EP 17 16 2864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/241294 A1 (VIRELIZIER PIERRE [FR] ET AL) 23 September 2010 (2010-09-23) * the whole document * | 1-14 | INV. G01P5/16 |
| X | US 2004/128096 A1 (LUO JIA [US]) 1 July 2004 (2004-07-01) | 1,9 | |
| A | * paragraph [0120] - paragraph [0128] * | 2-8, 10-14 | |
| A | VORSMANN P: "METEOPOD, UN SYSTEME AEROPORTE POUR LES MESURES DE VENT MOYEN, DE TURBULENCE ET D'AUTRES GRANDEURS METEOROLOGIQUES", ONDE ELECTRIQUE, EDITIONS CHIRON S.A. PARIS, FR, vol. 70, no. 2, 1 March 1990 (1990-03-01), pages 31-38, XP000102112, ISSN: 0030-2430 * the whole document * | 1-14 | |

TECHNICAL FIELDS
SEARCHED (IPC)

G01P
G05D

The present search report has been drawn up for all claims

| Place of search | Date of completion of the search | Examiner |
|---|---|---|
| Munich | 22 September 2017 | Thomann, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 16 2864

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2017

| Patent document cited in search report | Publication date | Patent family member(s) | Publication date |
|---|---|---|---|
| US 2010241294 A1 | 23-09-2010 | FR 2943423 A1<br>US 2010241294 A1 | 24-09-2010<br>23-09-2010 |
| US 2004128096 A1 | 01-07-2004 | US 2004128096 A1<br>US 2005096801 A1 | 01-07-2004<br>05-05-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KAPOOR et al.** *Airplanes Aloft as a Sensor Network for Wind Forecasting, http://research.microsoft.com/en-us/um/people/horvitz/planesenors.pdflink*

- **GUADANO et al.** *Using aircraft as wind sensors for estimating accurate wind fields for air traffic management applications, http://oa.upm.es/36006/1/INVE_MEM_2014195683.pdf*